# EUROPEAN PATENT SPECIFICATION

(11) **EP 0 103 548 B1**
(45) Date of publication and mention of the grant of the patent: **01.06.1994**
(21) Application number: 83830166.1
(22) Date of filing: 16.08.1983
(51) Int. Cl.: B23K 3/02

(54) **Light-weight welder particularly suited for soft- and silver soldering and the like**
Leichter Lötkolben besonders geeignet für Weich- und Silberlöten und ähnliches
Fer à souder léger particulièrement apte au soudage tendre et à l'argent et soudage analogue

(30) Priority: 18.08.1982 IT 4900482
(43) Date of publication of application: 21.03.1984
(73) Proprietor: Santoro, Giovanni, I-00189 Roma (IT); Francolini, Ermanno, I-00168 Roma (IT)
(72) Inventor: Santoro, Giovanni, I-00189 Roma (IT); Francolini, Ermanno, I-00168 Roma (IT)
(74) Representative: Massari, Marcello

(56) References cited:
- EP-A- 0 004 035
- EP-A- 0 064 610
- FR-A- 2 141 245

## Description

This invention refers to a light-weight solderer or soldering iron particularly suitable for soft and silver soldering and the like, the power of which is variable according to the soldering temperature, wherein the soldering tip is the sensing member for detecting the soldering temperature. Furthermore, the solderer of the invention has an extremely low thermic inertia whereby the power delivered immediately reaches the value of the power required.

The solderers available at present to carry out a soldering of this type are essentially of three different types.

Trigger-operated rapid or pistol solderers, which are mainly used for soft soldering, have a soldering tip which reaches almost immediately the operating temperature corresponding to the solder melting temperature.

The above-mentioned solderers comprise a network voltage transformer having the secondary on the soldering tip.

Solderers of the second type are solderers comprising a continously loaded resistor.

Solderers of the third type are essentially solderers of the second type provided with a thermostat which controls the power supplied to the resistor, cutting off this power supply whenever the soldering tip reaches an excessive temperature.

The above-mentioned solderers have some drawbacks preventing a satisfactory soldering from being carried out thereby.

Solderers of the first type or rapid solderers operate at extremely variable soldering temperatures and at constant power. Accordingly, the soldering tip can reach temperatures much higher than the solder melting temperature and thus the soldering tip is "burnt". Furthermore, the solder can also "bind" to the tip, thus preventing any further use thereof.

Solderers of the second type, wherein the temperature is controlled by dissipating heat into the environment, have a drawback in that these solderers very easily reach temperatures at which the solder burns, thus causing the solder to "bind" to the soldering tip.

In this field document FR-A-2.141.245 discloses a device for controlling the temperature of electric resistances that can be utilized in soldering irons.

In this device the resistance member comprises two pieces namely an external hollow member and a resistance member fitted therein. The two pieces are joined and electrically connected in one point only, such that a voltage is generated at said point. The resistance member is alternatively connected, through a timed changeover switch, to the power source and a threshold amplifier, wherein the threshold is adjustable through a potentiometer. When the voltage exceeds the threshold value set by the potentiometer the power supply is cut. This solution has two drawbacks, namely that the temperature gauging and control is not continuous and the resistance member (soldering tip) must consist of two pieces electrically insulated but in a single point, with a consequent complicate and costly stucture that, furthermore, has a high thermic inertia.

Welders of the third type have a theorical advantage in that the welding temperature is kept constant by the thermostat, but they have high thermic inertia. Accordingly, the thermostatic control of the tip occurs with a considerable delay and thus the inherent advantages of the above-mentioned structure are almost completely cancelled.

Accordingly, the use of the welders available at present is the source of many drawbacks the most serious of which, from an economic point of view, being that the excessively high tip temperature not only causes the solder to burn, but can also damage the costly electronic components to be welded.

The above-mentioned welders should thus be used in manufacturing electronic circuits with some precautions which highly increase the manufacturing time.

Accordingly, it is an object of the invention to provide a welder completely free from the drawbacks of the welders available on the market.

The welder of the invention comprises a tip temperature control circuit automatically controlling the power supplied. Accordingly, the welding temperature is always comprised between the optimal range, thus allowing a "not burnt" welding to be obtained and preventing the electronic components from being damaged when these electronic components must be welded to printed circuits or the like.

The solderer of the invention, which is similar to the solderers provided with a thermostat but is free from the drawbacks thereof, is characterized in that the soldering tip is the temperature detecting member which is connected to the temperature control circuit which thus controls the power supplied. Accordingly, the variation of the power supply required for keeping the soldering tip temperature at a constant level occurs practically immediately.

The solderer of the present invention will be now described in detail with reference to the annexed drawing, wherein:

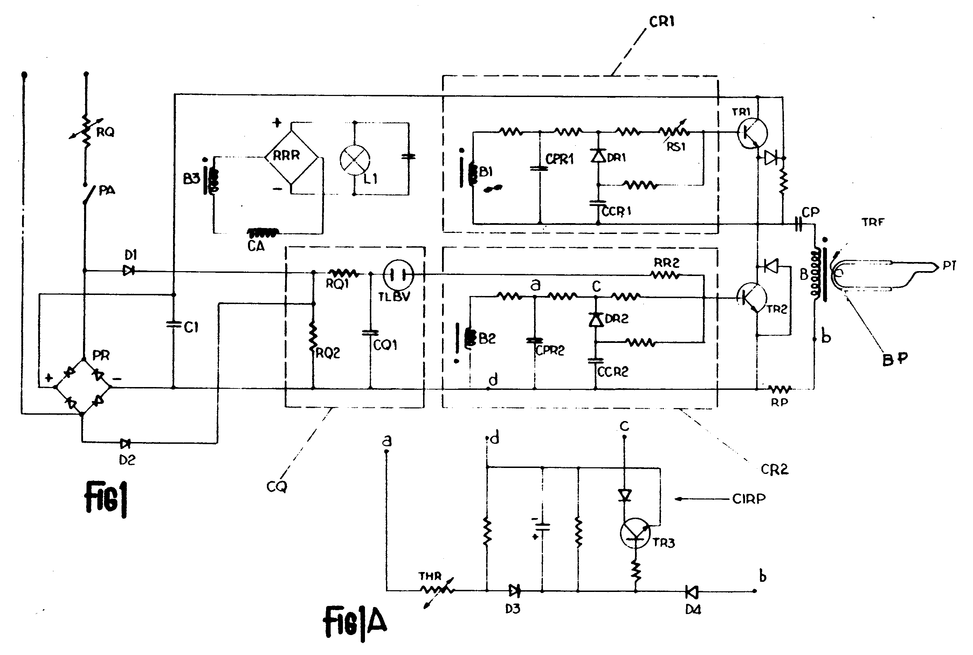

Figure 1 is a diagram of the whole solderer circuit; and,
Figure 1A is a diagram of the protection circuit associated to the diagram of Figure 1.

Having an outer structure substantially of the pistol type comprising a lamp for lighting the working area, the solderer of the invention essentially comprises: a network voltage transformer TRF having a primary B and four secondaries BP, B1, B2 and B3; an excitation circuit CQ; a first reaction circuit CR1; a second reaction circuit CR2; a soldering tip PS and a protection circuit CIRP (Fig. 1).

Furthermore, the circuit of Figure 1 comprises two diodes D1, D2, a lamp LI for lighting the working area and an input circuit CA connected thereto, a thermistor RQ of the NTC type for protecting the diodes of bridge PR and an operating push button PA. Excitation circuit CQ comprises a resistor RQ1, a resistor RQ2, a capacitor CQ1 and a low vacuum luminous tube TLBV.

First reaction circuit CR1 comprises secondary B1 of transformer TRF, a first capacitor CPR1, a second capacitor CCR1,a diode DR1, a rheostat RS1 for controlling the temperature of soldering tip PT and a transistor TR1.

Second reaction circuit CR2 comprises secondary B2 of transformer TRF, a first capacitor CPR2, a second capacitor CCR2, a diode DR2 and a transistor TR2.

Protection circuit CIRP comprises a diode D3, a diode D4, a thermistor THR and a transistor TR3.

As clearly seen in the circuitry, soldering tip PT is connected to secondary BP of transformer TRF, while reaction circuits CR1 and CR2 are connected to secondaries B1 and B2 respectively, and the working area lighting lamp LI is connected to secondary B3 of transformer TRF.

The output of bridge PR is connected to capacitor C1, which is preferably of the electrolytic type, and is the solderer input.

Diodes D1 and D2 on the network voltage reveal the 100 Hz pulses, namely twice the network frequency, and supply excitation circuit CQ. Capacitor CQ1 is loaded by diodes D1, D2, partially equalizes the pulsing voltage and unloads on the base of transistor TR2 of second reaction circuit CR2.

It should be pointed out that the unload pulse of capacitor CQ1 is very strong and the low vacuum luminous tube TLBV de-energizes and turns off at each pulse because the resistance of resistor RQ1 is very high (preferably about 1M ).

Reaction circuits CR1 and CR2 comprise combinations of capacitors and resistors causing the phase to rotate from the output of TR1 and TR2 and the reaction on the base thereof, thus obtaining an optimal reaction on the base of TR1. Furthermore, first reaction circuit CR1 comprises a rheostat RS1 in series with the base of TR1, which rheostat RS1 controls the value of the temperature of soldering tip PT. Diode DR1 of circuit CR1 and diode DR2 of circuit CR2 act as peak detectors and load capacitor CC1 and the like with a negative voltage.

The bases of transistors TR1, TR2 are normally inhibited but each time that TLBV de-energizes transistor TR2 turns ON whereby primary B of transformer TRF receives power and a reaction signal is developped on secondaries B1 and B2 thereof. This reaction signal supplies a voltage alternatively to the bases of TR1 and TR2 which thus self-oscillate while diodes DR1 and DR2 connected to the bases of transistors TR1, TR2 tend to inhibit these transistors.

The new concept of the solderer of the invention is to use the property of conductive metals according to which the ohmic resistance thereof increases according to the increase in temperature.

Accordingly, for the purposes of operation of the solderer of the invention the increase in the ohmic resistance of the soldering tip PT due to the increase in the temperature thereof causes a variation of the load on primary B of transformer TRF. Accordingly there is a variation of the inductance of transformer TRF which is connected to capacitor CP, since the circuit is self-oscillating, and a variation of the voltage on the terminals of primary B. This variation of the voltage on primary B and the variation of the voltage on secondaries B1 and B2 together with the variation of the oscillation frequency of transistors TR1 and TR2 affect both the base voltage of these transistors and the reaction signal phase thus causing a rotation of the phase and a modification of the amplitude. Accordingly, as the temperature of tip PT increases the power supplied thereto by transistors TR1 and TR2 decreases and viceversa and thus transistors TR1 and TR2 act as a blocked oscillator at the maximum value of the temperature of tip PT and as a continuous oscillator at the minimum value of such temperature. It should be noted now that low vacuum tube TLBV is intended to trigger reaction circuit CR2 whenever the oscillation thereof is blocked.

Figure 1 shows a protection circuit for protecting the solderer against the overheating of transistors TR1 and TR2 or transformer TRF.

It is evident that protection circuit CIRCP is connected to the welder circuit at common points a, b, c and d.

In use, thermistor THR which operates as a grounded divider and is located close to the dissipator of transistors TR1 and TR2 heats as the temperature of the dissipator increases, thus causing a decrease in the ohmic resistance thereof.

Accordingly, the signal from secondary B2 of transformer TRF increases, which signal is revealed by diode D3 and applied to the base of transistor TR3 that turns to ON state short-circuiting the reaction o signal of secondary B2 and blocking the self-oscillation.

On the contrary, if transformer TRF overheats, the maximum induction of the core thereof decreases and in the core the power exceeds the value of such maximum induction by high peak values of power on resistor RP. Diode D4 reveals the voltage on resistor RP and causes transistor TR3 to turn ON, thus blocking the oscillation as in the above-mentioned case.

The working area lighting lamp LI is supplied by circuit CA which comprises secondary B3 of transformer TRF and rectifier RRR.

From the foregoing it is evident that the solderer of the invention completely reaches the objects of the invention.

## Claims

1. A light-weight soldering iron for effecting soft and silver solderings having a soldering tip of a resistive material capable of ohmically producing heat when crossed by an electric current, the ohmic resistance of which increases as the temperature increases; a power supply; a power transferring circuit for transferring current from said power supply to said soldering tip; a control circuit for controlling the power supplied to said tip, in order to control the soldering temperature of said soldering tip, and a temperature detecting member connected to said control circuit, characterized in that said soldering tip is made of one piece and constitutes by itself the detecting member that continuously detects the soldering temperature.

2. The soldering iron of claim 1, substantially comprising in combination: a network voltage transformer (TRF) having a primary (B) and four secondaries (BP, B1, B2 and B3); said soldering tip (TP) being connected to a first (BP) of said four secondaries of transformer (TRF); two power transistors (TR1 and TR2) operatively connected to said primary (B) of transformer (TRF); an excitation circuit (CQ); a first reaction circuit (CR1) including another secondary (B1) of said four secondaries; a second reaction circuit (CR2) including another secondary (B2) of said four secondaries; and a protection circuit (CRP), and wherein said excitation circuit (CQ) is connected to one of said power transistor (TR2) through said second reaction circuit (CR2) and said first reaction circuit (CR1) is connected the other of said two power transistors (TR1) so that said excitation circuit (CQ) is piloting the conducting state of said two power transistors (TR1, TR2) and consequently the passage of power to said soldering tip (TP) through said primary (B) and secondary (BP) of said transformer (TRF).

3. The soldering iron of claim 2, further comprising a rectifying bridge (PR); two diodes (D1, D2) connected to said excitation circuit (CQ) to apply thereto pulses at network frequency which are transformed in very short excitation pulses applied to said first power transistor (TR2) through said first reaction circuit (CR2); a lamp (LI) for lighting the working area; an impedance (CA) for limiting the power applied to said lamp (LI) through another (B3) of said four secondaries of said transformer (TRF); a thermistor (RQ) of the NTC type for protecting the diodes of said rectifying bridge (PR) and an operating push button (PA).

4. The soldering iron of claim 3, wherein said excitation circuit (CQ) substantially comprises a first resistor (RQ1) and a second resistor (RQ2) parallel connected to said diodes (D1, D2) as a load therefor; a low vacuum tube (TLBV); a capacitor (CQ1) forming together with said first resistor (RQ1) a time constant for timing said low vacuum tube (TLBV) on which the load of capacitor (CQ1) discharges and wherein said low vacuum tube (TLBV) triggers said first power transistor (TR2) through said second reaction circuit (CR2).

5. The soldering iron of claim 4, wherein said first reaction circuit (CR1) further comprises a first phasing capacitor (CPR1); a second capacitor (CCR1) connected to a diode (DR1) for generating a DC voltage for inversely polarizing said other power transistor (TR1).

6. The soldering iron of claim 5, said second reaction circuit (CR2) further comprises a first phasing capacitor (CPR2); a second capacitor (CCR2) connected to a diode (DR2) for generating a DC voltage for inversely polarizing said first power transistor (TR2).

7. The soldering iron of claim 2, wherein said protection circuit (CIRP) further comprises a first threshold diode (D3); a second threshold diode (D4); a thermistor (THR) and a third transistor (TR3) and wherein said diodes (D3, D4) are connected to said third transistor to apply thereto warning signals about excessive temperature of said power transistors (TR1, TR2), under the control of said thermistor (THR), and excessive temperature of said transformer (TRF) so that said third transistor (TR3) may shortcircuit the reaction signals from the transformer secondary (B2) included in said second reaction circuit (CR2), thus cutting the power applied to said transformer primary (B).

## Patentansprüche

1. Leichter Lötkolben zum Weich- und Silberlöten mit einer Lötspitze aus einem Widerstandsmaterial, das zur ohmschen Erzeugung von Wärme fähig ist, wenn ein elektrischer Strom daran angelegt wird, und dessen ohmscher Widerstand mit steigender Temperatur zunimmt; einer Stromversorgung; einer Stromübertragungsschaltung, um Strom von der Stromversorgung zu der Lötspitze zu übertragen; einer Steuerschaltung, um den der Spitze zugeführten Strom und damit die Löttemperatur der Lötspitze zu steuern, und einem Temperaturmeßelement, das mit der Steuerschaltung verbunden ist, dadurch gekennzeichnet, daß die Lötspitze einstückig ist und selbst das Meßelement bildet, das die Löttemperatur kontinuierlich mißt.

2. Lötkolben nach Anspruch 1, der in Kombination im wesentlichen aufweist: einen Netzspannungswandler (TRF) mit einer Primärwicklung (B) und vier Sekundärwicklungen (BP, B1, B2 und B3); wobei die Lötspitze (TP) mit einer ersten (BP) der vier Sekundärwicklungen des Wandlers (TRF) verbunden ist; zwei Leistungstransistoren (TR1 und TR2), die betriebsmäßig mit der Primärwicklung (B) des Wandlers (TRF) verbunden sind; einen Erregerkreis (CQ); einen ersten Rückkopplungskreis (CR1) mit einer weiteren Sekundärwicklung (B1) der vier Sekundärwicklungen; einen zweiten Rückkopplungskreis (CR2) mit einer weiteren Sekundärwicklung (B2) der vier Sekundärwicklungen; und eine Schutzschaltung (CRP), und wobei der Erregerkreis (CQ) über den zweiten Rückkopplungskreis (CR2) mit einem (TR2) der Leistungstransistoren und der erste Rückkopplungskreis (CR1) mit dem anderen (TR1) der beiden Leistungstransistoren verbunden ist, so daß der Erregerkreis (CQ) den leitenden Zustand der beiden Leistungstransistoren (TR1, TR2) und damit den Stromdurchfluß zu der Lötspitze (TP) durch die Primärwicklung (B) und die Sekundärwicklung (BP) des Wandlers (TRF) steuert.

3. Lötkolben nach Anspruch 2, der ferner aufweist: eine Gleichrichterbrücke (PR); zwei Dioden (D1, D2), die mit dem Erregerkreis (CQ) verbunden sind, um an diesen Impulse mit Netzfrequenz anzulegen, die in sehr kurze Erregungsimpulse umgewandelt werden, die über den ersten Rückkopplungskreis (CR2) an den ersten Leistungstransistor (TR2) angelegt werden; eine Lampe (LI) zum Beleuchten des Arbeitsbereichs; eine Impedanz (CA), um den Strom zu begrenzen, der durch eine weitere (B3) der vier Sekundärwicklungen des Wandlers (TRF) der Lampe (LI) zugeführt wird; einen Heißleiter (RQ), um die Dioden der Gleichrichterbrücke (PR) zu schützen, und eine Betätigungs-Drucktaste (PA).

4. Lötkolben nach Anspruch 3, wobei der Erregerkreis (CQ) im wesentlichen aufweist: einen ersten Widerstand (RQ1) und einen zweiten Widerstand (RQ2), die den Dioden (D1, D2) als Last für diese parallelgeschaltet sind; eine Niedervakuumröhre (TLBV); einen Kondensator (CQ1), der gemeinsam mit dem ersten Widerstand (RQ1) eine Zeitkonstante bildet, die die Niedervakuumröhre (TLBV) in bezug auf den Zeitpunkt steuert, zu dem sich der Kondensator (CQ1) entlädt, und wobei die Niedervakuumröhre (TLBV) den ersten Leistungstransistor (TR2) über den zweiten Rückkopplungskreis (CR2) ansteuert.

5. Lötkolben nach Anspruch 4, wobei der erste Rückkopplungskreis (CR1) ferner aufweist: einen ersten Phaseneinstellkondensator (CPR1); einen zweiten Kondensator (CCR1), der mit einer Diode (DR1) verbunden ist, um eine Gleichspannung zu erzeugen, um den anderen Leistungstransistor (TR1) umgekehrt zu polarisieren.

6. Lötkolben nach Anspruch 5, wobei der zweite Rückkopplungskreis (CR2) ferner aufweist: einen ersten Phaseneinstellkondensator (CPR2), einen zweiten Kondensator (CCR2), der mit einer Diode (DR2) verbunden ist, um eine Gleichspannung zu erzeugen, um den ersten Leistungstransistor (TR2) umgekehrt zu polarisieren.

7. Lötkolben nach Anspruch 2, wobei die Schutzschaltung (CIRP) ferner aufweist: eine erste Begrenzerdiode (D3); eine zweite Begrenzerdiode (D4); einen Thermistor (THR) und einen dritten Transistor (TR3), und wobei die Dioden (D3, D4) mit dem dritten Transistor verbunden sind, um diesem unter Steuerung durch den Thermistor (THR) Warnsignale über eine zu hohe Temperatur der Leistungstransistoren (TR1, TR2) und eine zu hohe Temperatur des Wandlers (TRF) zuzuführen, so daß der dritte Transistor (TR3) die Rückkopplungssignale von der Sekundärwicklung (B2) des Wandlers, die in dem zweiten Rückkopplungskreis (CR2) enthalten ist, kurzschließen kann, wodurch der der Primärwicklung (B) des Wandlers zugeführte Strom abgeschaltet wird.

## Revendications

1. Fer à souder léger destiné à effectuer des soudures tendres et des soudures à l'argent, comportant une pointe de soudage en matériau résistant capable de produire de la chaleur par effet Joule lorsqu'il est traversé par un courant électrique, la résistance ohmique de ce matériau augmentant lorsque la température augmente ; une alimentation de puissance ; un circuit de transmission de puissance destiné à transmettre le courant de l'alimentation de puissance à la pointe de soudage ; un circuit de commande destiné à commander la puissance fournie à la pointe de soudage de manière à commander la température de cette pointe de soudage ; et un élément de détection de température branché au circuit de commande ; fer à souder caractérisé en ce que la pointe de soudage est réalisée d'une seule pièce et constitue en elle-même l'élément de détection qui détecte en permanence la température de soudage.

2. Fer à souder selon la revendication 1, caractérisé en ce qu'il comprend essentiellement en combinaison : un transformateur de tension de réseau (TRF) comportant un enroulement primaire (B) et quatre enroulements secondaires (BP, B1, B2 et B3), la pointe de soudage (TP) étant branchée à un premier enroulement (BP) des quatre enroulements secondaires du transformateur (TRF) ; deux transistors de puissance (TR1 et TR2) branchés en fonctionnement à l'enroulement primaire (B) du transformateur (TRF) ; un circuit d'excitation (CQ) ; un premier circuit de réaction (CR1) comprenant un autre enroulement secondaire (B1) des quatre enroulements secondaires ; un second circuit de réaction (CR2) comprenant un autre circuit secondaire (B2) des quatre circuits secondaires ; et un circuit de protection (CRP) ; le circuit d'excitation (CQ) étant branché à l'un des transistors de puissance (TR2) par l'intermédiaire du second circuit de réaction (CR2) et le premier circuit de réaction (CR1) étant branché à l'autre des transistors de puissance (TR1), de façon que le circuit d'excitation (CQ) commande l'état de conduction des deux transistors de puissance (TR1, TR2) et par suite le passage du courant d'alimentation dans la pointe de soudage (TP) par l'enroulement primaire (B) et l'enroulement secondaire (BP) du transformateur (TRF).

3. Fer à souder selon la revendication 2, caractérisé en ce qu'il comprend en outre un pont de redressement (PR) ; deux diodes (D1, D2) branchées ou circuit d'excitation (CQ) pour appliquer à celui-ci des impulsions à la fréquence du réseau qui sont transformées en impulsions d'excitation très courtes appliquées au premier transistor de puissance (TR2) par l'intermédiaire du premier circuit de réaction (CR2) ; une lampe (LI) destinée à éclairer la zone de travail ; une impédance (CA) destinée à limiter la puissance appliquée à la lampe (LI) par l'intermédiaire d'un autre enroulement (B3) des quatre enroulements secondaires du transformateur (TRF) ; une thermistance (RQ) de type NTC destinée à protéger les diodes du pont de redressement (PR) ; et un bouton poussoir de mise en marche (PA).

4. Fer à souder selon la revendication 3, caractérisé en ce que le circuit d'excitation (CQ) comprend essentiellement une première résistance (RQ1) et une seconde résistance (RQ2) branchée en parallèle sur les diodes (D1, D2) pour servir de charge à celles-ci ; un tube à faible vide (TLBV) ; un condensateur (CQ1) formant avec la première résistance (RQ1) une constante de temps de minutage du tube à faible vide (TLBV) dans lequel se décharge le condensateur (CQ1) ; et en ce que le tube à faible vide (TLBV) déclenche le premier transistor de puissance (TR2) par l'intermédiaire du second circuit de réaction (CR2).

5. Fer à souder selon la revendication 4, caractérisé en ce que le premier circuit de réaction (CR1) comprend en outre un premier condensateur de mise en phase (CPR1) ; un second condensateur (CCR1) branché à une diode (DR1) pour produire une tension continue destinée à polariser en sens inverse l'autre transistor de puissance (TR1).

6. Fer à souder selon la revendication 5, caractérisé en ce que le second circuit de réaction (CR2) comprend en outre un premier condensateur de mise en phase (CPR2) ; un second condensateur (CCR2) branché à une diode (DR2) pour produire une tension continue destinée à polariser en sens inverse le premier transistor de puissance (TR2).

7. Fer à souder selon la revendication 2, caractérisé en ce que le circuit de protection (CIRP) comprend en outre une première diode de seuil (D3), une seconde diode de seuil (D4), une thermistance (THR) et un troisième transistor (TR3) ; et en ce que les diodes (D3, D4) sont branchées au troisième transistor pour appliquer à celui-ci des signaux d'avertissement d'une température excessive des transistors de puissance (TR1, TR2) sous la commande de la thermistance (THR), et d'une température excessive du transformateur (TRF), de façon que le troisième transistor (TR3) puisse court-circuiter les signaux de réaction de l'enroulement secondaire (B2) du transformateur compris dans le second circuit de réaction (CR2), en coupant ainsi la puissance appliquée à l'enroulement primaire (B) du transformateur.
